# EUROPÄISCHE PATENTSCHRIFT

(11) **EP 0 651 610 B1**
(45) Veröffentlichungstag und Bekanntmachung des Hinweises auf die Patenterteilung: **31.07.1996**
(21) Anmeldenummer: 93915875.4
(22) Anmeldetag: 10.07.1993
(51) Int. Cl.: A23C 19/082, A23J 3/08

(54) **VERWENDUNG VON STABILISIERTEN MOLKEPROTEINPULVERN ZUR HERSTELLUNG VON SCHMELZKÄSE UND KÄSEZUBEREITUNGEN SOWIE VERFAHREN ZU IHRER HERSTELLUNG**
USE OF STABILIZED WHEY-PROTEIN POWDER IN THE PRODUCTION OF PROCESS CHEESE AND CHEESE PREPARATIONS, AND METHODS OF MANUFACTURING SUCH PRODUCTS
UTILISATION DE POUDRES DE PROTEINE DE LACTOSERUM STABILISEES DANS LA FABRICATION DE FROMAGE FONDU ET DE PREPARATIONS A BASE DE FROMAGE, ET PROCEDE DE FABRICATION DE TEILS PRODUITS

(30) Priorität: 11.07.1992 DE 4222875
(43) Veröffentlichungstag der Anmeldung: 10.05.1995
(73) Patentinhaber: DANMARK PROTEIN A/S, DK-6920 Videbaek (DK)
(72) Erfinder: MERKENICH, Karl, D-64658 Fürth/Fahrenbach (DE); MAURER-ROTHMANN, Andrea, D-74915 Waibstadt (DE); SCHEURER, Günther, D-67454 Ha loch (DE); WALTER, Edgar, D-68169 Mannheim (DE); ALBERTSEN, Kristian, Videbaek (DK); WILMSEN, Arnd, DK-7400 Herning (DK)
(74) Vertreter: Grussdorf, Jürgen, Dr.
(86) Internationale Anmeldenummer: EP9301813
(87) Internationale Veröffentlichungsnummer: WO9401000

(56) Entgegenhaltungen:
- DE-A- 2 342 299
- US-A- 4 166 142
- JOURNAL OF FOOD SCIENCE Bd. 49, Nr. 1, 1984, CHICAGO US Seiten 32-33 - 39 I. BARLOW ET AL. 'Stability of reconstituted whey protein concentrates to ultra-heat-treatment processing'
- DATABASE WPI Section Ch, Week 7108, Derwent Publications Ltd., London, GB; Class D13, AN 71-14814S
- H. KLOSTERMEYER 'Die Schmelzkäseherstellung' 1989 , BENCKISER KNAPSACK , LADENBURG, DE

## Beschreibung

Die vorliegende Erfindung betrifft die Verwendung von stabilisierten Proteinpulvern zur Herstellung von Schmelzkäse und Käsezubereitungen sowie Verfahren zu ihrer Herstellung.

Schmelzkäsezubereitungen wurden bereits im Jahre 1911 erstmalig hergestellt und später unter wechselnder Zusammensetzung der Ausgangsstoffe laufend geschmacklich, im Aussehen und in der Textur verbessert. Je nach der Zusammensetzung können dabei streichfähige oder schnittfeste Produkte erhalten werden. Ausgangsmaterial ist ein schnittfester Käse, wie Gouda, Emmentaler etc., welcher zerkleinert und zusammen mit Fett, insbesondere Butter, und Schmelzsalzen sowie gegebenenfalls etwas Wasser bei Temperaturen von ca. 80 bis 95°C gemischt und geschmolzen wird, wonach die Masse ausgeformt, abgekühlt und verpackt wird. Als Schmelzsalze werden Trinatriumcitrat oder Natriumphosphat oder ihre Mischungen, meist in Form der handelsüblichen Hydrate, verwendet. Darüber hinaus enthalten Schmelzkäse häufig noch Bindemittel oder Verdicker, beispielsweise Stärke, Guar-Kernmehl, Pectin, Carboxymethylcellulose, Agar-Agar, Alginate oder ähnliche Produkte. Anstelle des teuren Hartkäses können in geringem Umfang Käseersatzstoffe, wie Casein, Molkepulver, Quark, Joghurt, Milcheiweiß, und in gewissem Umfang auch pflanzliche Proteine, insbesondere Sojaproteine, mitverwendet werden. Besonders interessant wäre in diesem Zusammenhang die Verwendung der natürlichen Milcheiweiße, wie sie in Molkepulver und Casein vorkommen. Es ist jedoch bekannt, daß diese dem Schmelzkäse nur in kleinen Mengen - Molkepulver bis zu etwa 4 %, Casein bis zu etwa 10 %, Labcasein bis 20 % - der Schmelzkäsemasse zugesetzt werden dürfen, da bei größeren Mengen diese Proteine aus der Schmelzkäsemasse auskristallisieren und somit dem Schmelzkäse eine "sandige Konsistenz" verleihen bzw. als Stippen sichtbar werden oder sogar der ganzen Masse einen bitteren Geschmack verleihen. (Die Schmelzkäseherstellung, Johaleitfaden, Benckiser Knapsack 1989, Seite 93-96).

Es stellte sich daher die Aufgabe, Molkeproteine so zu verändern, daß sie in Mengen von 10 bis 20 % einer Schmelzkäsezubereitung zugefügt werden können, ohne auszufallen oder den Geschmack des Produktes zu verändern.

Diese Aufgabe wird überraschenderweise durch die in den Hauptansprüchen aufgeführten Merkmale gelöst und durch die in den Unteransprüchen aufgeführten Merkmale gefördert.

Gemäß DE-AS 25 22 508 wird eine Suspension von Casein, welche nicht mehr als 270 g Casein/l enthält, zunächst mit Citronensäure oder Phosphorsäure bei pH-Werten "nicht unter 4,6" gereift und anschließend durch Zugabe von Alkali der pH-Wert wiederum auf 6,8 bzw. 7,5 abgesenkt. Die so erhaltenen Produkte können konzentriert oder durch irgendein Verfahren getrocknet werden und ergeben dabei ein Caseinat, welches direkt in Wasser aufgelöst werden kann, wobei eine echte Lösung bzw. eine kolloidiale Lösung oder ein Gel erhalten wird. Die Verwendbarkeit solcher Produkte in Käsezubereitungen, bei der es auf die Emulgierbarkeit der Proteine ankommt, ist nicht beschrieben.

In der EP 0 076 685 wird ein Verfahren zur Herstellung von Molkenproteinen beschrieben, die eine verbesserte Gelbildung aufweisen, wobei der pH-Wert der Molkeproteinlösung zunächst auf 8,5 - 11,5 erhöht werden soll, um die "Sulfhydrylgruppenzahl" zu erhöhen, worauf der Lösung anschließend zunächst schwächere Säuren, wie Citronensäure, Phosphorsäure oder Polyphosphorsäure zugesetzt werden und anschließend eine starke Säure wie Salzsäure oder Schwefelsäure zugegeben wird, um den pH der Lösung auf 6 bis 8 einzustellen. Durch die Depolymerisation der Sulfhydrylgruppen in alkalischer Lösung wird die Wasserlöslichkeit einerseits verbessert, und durch Wiederkombinieren von Sulfhydrylbrücken andererseits die Gelbildung bewirkt. Eine Verwendung solcher Produkte als Zusätze zu Schmelzkäse ist dieser Schrift nicht zu entnehmen.

Aus Journal of Food Science 1984, No. 1, Seite 32, 33 und 39 ist bekannt, Molkepulver (WPC - whey protein concentrates) für die Weiterverarbeitung in Wasser wieder aufzulösen, in dem man ein Natriumorthophosphat in einer Menge von 0,1 - 0,25 % bezogen auf das Proteinpulver zugibt und die Lösung bis 75 - 85°C tempert, bevor eine Hitzesterilisation durchgeführt wird. Für die Wiederauflösung möglich aber weniger günstig ist es das Phosphat bereits bei der Herstellung der Molkepulver zuzufügen. Überraschenderweise sind solche Produkte jedoch sehr gut geeignet zur Herstellung von Schmelzkäse, während die nachträgliche Zugabe von Phosphaten zum einmal getrockneten WPC sich als unbrauchbar erweist.

Die erfindungsgemäß verwendeten Molkeproteine können einer Schmelzkäsezubereitung in Mengen bis 20 % zugesetzt werden, wobei Molkeprotein in weiten Grenzen das bisher zu Erzielung der notwendigen Härte der Käsezubereitung in Mengen von etwa 5 bis 10 % zugesetzte Casein ersetzen kann. Die mit Phosphaten oder Citraten stabilisierten nativen Molkeproteinpulver lassen sich überraschend leicht in der Käsemasse auflösen und neigen nicht zur Kristallisation, so daß die hergestellten Schmelzkäse auch nach längerer Lagerung weder eine sandige Textur noch äußerliche Stippen aufweisen.

Es wird angenommen, daß diese Stabilisierung darauf zurückzuführen ist, daß sich Phosphat- bzw. Citratmoleküle unter den erfindungsgemäßen Bedingungen in die Tertiärstruktur der Proteine einlagern, so daß diese bei der nachfolgenden Trocknung stabilisiert wird. Entscheidend ist dabei, daß die Proteine offensichtlich in Lösung mit diesen Verbindungen behandelt werden müssen, da einmal ausgefällte und getrocknete Proteine anschließend durch Resuspendieren in Wasser und Behandeln mit Phosphaten bzw. Citraten nicht oder möglicherweise erst nach sehr langen Zeiträumen in die entsprechende, einer Vermischung mit dem Schmelzkäse förderliche Struktur überführt werden können. Eine Vermischung von Molkeprotein in unstabilisierter Form unter Zugabe der Natriumphosphate oder -citrate auch in der wesentlich höheren Konzentration, in der sie als Schmelzsalze eingesetzt werden (1,5 bis 3 %), führt - wie oben gesagt - ebenfalls nicht mehr zu einer nachträglichen Stabilisierung, so daß solche Produkte nach dem Stand der Technik eben nur in geringer Menge zugefügt werden dürfen.

Zur Herstellung der stabilisierten Molkepulver geht man vorzugsweise von der in großen Mengen bei der Quark und Käsezubereitung anfallenden Molke aus, welche durch Ultrafiltrations- und sonstige bekannte Verfahren aufkonzentriert und gleichzeitig von einem Teil der enthaltenen Lactose und Salze befreit wird. Eine durchschnittliche Molke enthält dabei ca. 0,9 % Eiweiß, 0,1 % Fett, 4,5 % Lactose und 0,7 g anorganische Salze. Eine solche Molke wird beispielsweise auf 30 % Trockenmasse aufkonzentriert, wobei das Konzentrat beispielsweise 16 % Proteine (56 % i.T.), 1,6 % Fett (5,6 % i.T.), 9,5 % Lactose (33 % i.T.) und 1,4 % anorganische Salze (5 % i.T.) enthält. Diesem Konzentrat werden 0,2 bis 5 % eines Schmelzsalzes aus der Gruppe Ortho- Di-, Pyro- und Polyphosphat (zusammen als Phosphat bezeichnet) und/oder Citrat zugefügt, wobei die Natriumsalze bevorzugt sind, jedoch auch Kalium- oder Ammoniumsalze in Frage kommen. Die Zugabe sollte etwa 0,5 bis 20 % der Proteinkonzentration betragen, wobei die Konzentration von 1 bis 5 % im Hinblick auf die Stabilisierung die optimalen Werte ergibt. Mengen über 20 % sind unwirtschaftlich, da normalerweise damit auch die für die Herstellung der Schmelzkäse erforderliche Schmelzsalzkonzentration überschritten wird. Eine Konzentration von unter 0,2 % der Lösung bzw. unter 0,5 % der eingesetzten Proteinkonzentration bewirkt keine ausreichendende Stabilisation, so daß sich diese Produkte von bekannten Molkeproteinpulvern nicht unterscheiden. Die Zugabe der Stabilisatoren erfolgt vorzugsweise als eine 1 bis 10 %-ige Lösung in Wasser und es ist jedoch auch möglich, höhere Konzentrationen, beispielsweise 10 bis 50 %, als Slurry zuzuführen, um dadurch die Proteinlösung nicht unnötig zu verdünnen. Eine Zufügung als trockenes Pulver ist zwar möglich, aber wegen der schlechten Mischbarkeit nicht bevorzugt.

Die Zugabe der Schmelzsalze als Stabilisierungsmittel erfolgt in einem pH-Bereich zwischen 2,8 und 8,0, vorzugsweise im pH-Bereich von etwa 7,0 bis 4,0, in welchem die betreffenden Proteinlösungen stabil sind. Um die Gleichgewichts-einstellung zwischen Phosphat und Protein zu beschleunigen, hat es sich als vorteilhaft erwiesen, die Lösungen zu erwärmen, wobei Temperaturen von 35 bis 150°C, vorzugsweise 50 bis 90°C, angewendet werden und abhängig von der Temperatur Reaktionszeiten von 2 sec. bis etwa 10 min. erforderlich sind. Bei Temperaturen oberhalb des Siedepunkts muß natürlich mit einem entsprechenden Überdruck gearbeitet werden. Die Erwärmung kann durch entsprechende Wärmeaustauscher wie Plattenwärmeaustauscher, Röhrenerhitzer, Schabenerhitzer oder durch direkte oder indirekte Erhitzung mit Wasserdampf erfolgen.

Die Trocknung der erfindungsgemäßen Proteinlösung zum stabilen Endprodukt erfolgt in üblicher Weise mit Sprühtrocknern, Sprühtürmen, Wirbelschichttrocknern, jedoch auch Walzentrocknern und anderen bekannten Apparaten. Der Feuchtigkeitsgehalt des Endproduktes sollte unter 7 %, vorzugsweise 2-5 %, liegen.

Durch die gemeinsame Versprühung der Molke mit Schmelzsalzen, insbesondere Phosphaten, gelingt es, die funktionellen Eigenschaften dieser Proteine entscheidend zu verbessern. In Schmelzkäse, Schmelzkäsezubereitungen, Frischkäse und Frischkäsezubereitungen aus Schmelzkäse, Imitation-Cheese, Rekonstituten, Pizza Toppings, Brotaufstrichen, Käsedips und Käsesoßen können diese funktionell veränderten Proteine eingesetzt werden, wobei Mengen von 5 bis 10 % Molkeprotein (WPC) Konsistenz, Aussehen und Geschmack des Fertigprouktes nicht verändern.

Bei geringeren Mengen der erfindungsgemäßen Proteine bzw. bei einem geringeren Schmelzsalzgehalt derselben muß der Käsemischung natürlich noch die erforderliche zusätzliche Menge eines Schmelzsalzes in üblicher Weise beigegeben werden. Die übrigen Bestandteile dieser erfindungsgemäßen Schmelzkäsezubereitungen entsprechen dem was für solche Herstellungen analog bekannt ist.

Das folgende Fließschema, wobei für Molkeproteine verschiedene Konzentration und Produktzusammensetzung eingesetzt wurden, gibt die erfindungsgemäße Verfahrensführung wieder.

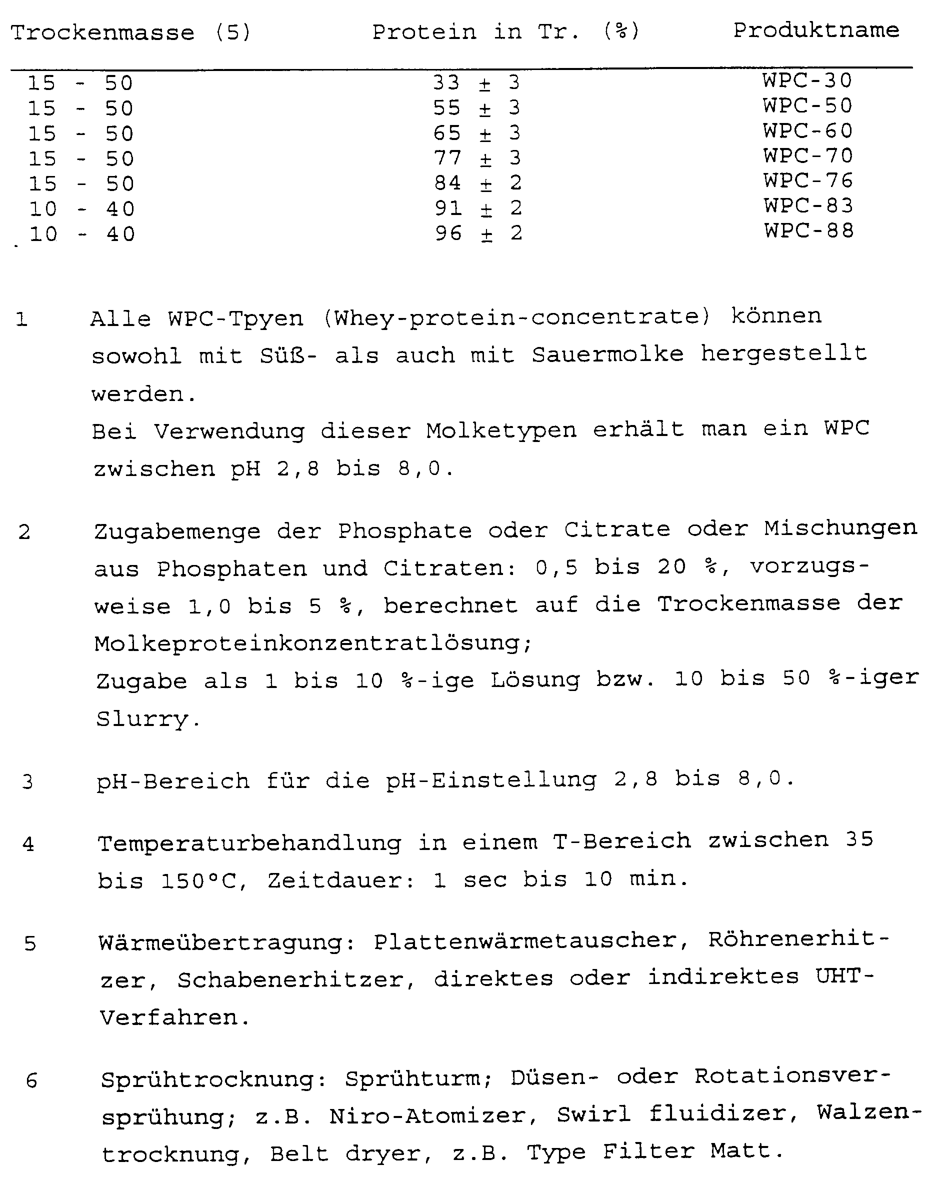

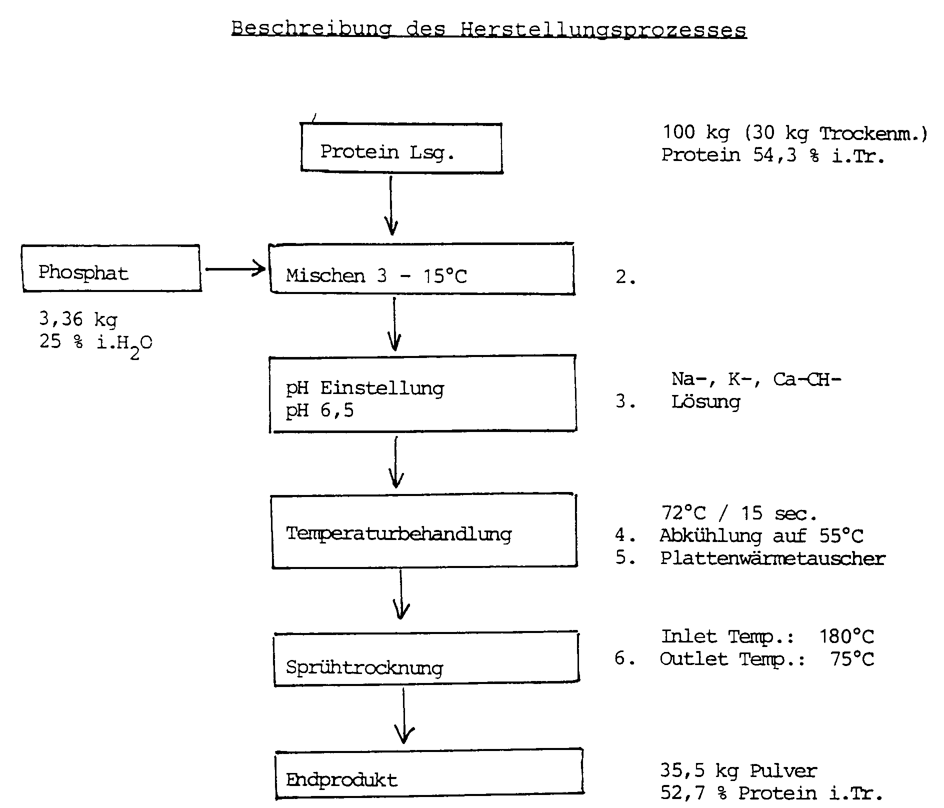

Für die Verwendung der erfindungsgemäßen Produkte zur Herstellung von Schmelzkäsezubereitungen werden in der Anlage einige Beispiele beigefügt, die die Erfindung erläutern, aber nicht beschränken sollen. Wie man den Beispielen entnehmen kann, bewirkt eine Stabilisation der Molkeproteine eine wesentliche Verbesserung des Aussehens und der Konsistenz der erhaltenen Käse. Proteinanteile in den Molkeproteinen von unter 30 % in der Trockensubstanz oder eine nicht ausreichende Phosphatstabilisierung (native Proteine) erweisen sich als nicht brauchbar.

### Beispiel 1

Streichfähige Schmelzkäsezubereitung (49 % TM - 61 % Fett i.Tr.)
Zusatz 5 % Molkenprotein (96 % Protein) i. Endprodukt

### Grundrezeptur

- 750,0 g: Ceddar (50 % FiT)
- 750,0 g: Gouda (50 % FiT)
- 521,7 g: Butter (84 %)
- 75,0 g: Molkenprotein 96 % in Trockensubstanz
- 47,3 g: JOHA S 9
- 815,2 g: Wasser incl. Kondensat

Erhitzung der Zutaten innerhalb 9 min auf 90 bis 92°C, direkte Dampfzufuhr; Rührgeschwindigkeit 120 UpM;

### Varianten (für 5 % MP 96 %-ig) der o.g. Grundrezeptur:

a. natives Molkenprotein mit einem Proteingehalt von 80 %
   - sensorische Beurteilung::
   - Aussehen Äußeres:: klebt an der Folie
   - Inneres:: rauh
   - Konsistenz :: zu fest, untypisch
   - Geschmack :: nicht ausgeprägt
b. natives Molkenprotein, Proteingehalt 60 %
   - sensorische Beurteilung::
   - Aussehen Äußeres:: klebt an der Folie
   - Inneres:: rauh
   - Konsistenz :: zu fest, untypisch
   - Geschmack :: nicht ausgeprägt
c. natives Molkenprotein, Proteingehalt 35 %
   - sensorische Beurteilung::
   - Aussehen Äußeres:: klebt an der Folie
   - Inneres:: rauh
   - Konsistenz :: zu fest, untypisch
   - Geschmack :: nicht ausgeprägt
d. Molkenprotein modifiziert mit JOHA SDS 2, Proteingehalt 80 %
   - sensorische Beurteilung::
   - Aussehen Äußeres:: klebt leicht an der Folie
   - Inneres:: in Ordnung
   - Konsistenz :: cremig
   - Geschmack :: typisch
e. Molkenprotein modifiziert mit JOHA S 9, Proteingehalt 80 %
   - sensorische Beurteilung::
   - Aussehen Äußeres:: klebt leicht an der Folie
   - Inneres:: in Ordnung
   - Konsistenz :: cremig
   - Geschmack :: typisch
f. Molkenprotein modifiziert mit JOHA SDS 2, Proteingehalt 60 %
   - sensorische Beurteilung::
   - Aussehen Äußeres:: klebt leicht an der Folie
   - Inneres:: in Ordnung
   - Konsistenz :: cremig
   - Geschmack :: typisch
g. Molkenprotein modifiziert mit JOHA S 9, Proteingehalt 60 %
   - sensorische Beurteilung::
   - Aussehen Äußeres:: klebt leicht an der Folie
   - Inneres:: in Ordnung
   - Konsistenz :: cremig
   - Geschmack :: typisch
h. Molkenprotein modifiziert mit JOHA SDS 2, Proteingehalt 30 %
   - sensorische Beurteilung::
   - Aussehen Äußeres:: klebt an der Folie
   - Inneres:: leicht rauh
   - Konsistenz :: untypisch, rauh
   - Geschmack :: nicht ausgeprägt
i. Molkenprotein modifiziert mit JOHA S 9, Proteingehalt 30 %
   - sensorische Beurteilung::
   - Aussehen Äußeres:: klebt an der Folie
   - Inneres:: leicht rauh
   - Konsistenz :: untypisch, rauh
   - Geschmack :: nicht relevant

Die mit JOHA SDS 2 und mit JOHA S 9 modifizierten 60 %- und 80 %-igen Molkenproteine zeigen im Endprodukt eine lockere, glänzende und cremige Konsistenz. Modifizierte Proteine ab 30 % Protein sind jedoch ebenfalls noch brauchbar.

Die nicht modifizierten Molkenproteine sowie modifizierte Molkenproteine mit Proteingehalten unter 30 % zeigen nicht die gewünschten Ergebnisse. Die Konsistenz dieser Schmelzkäse ist zu fest, rauh, die Oberfläche ist matt, man erkennt Stippen.

Für die Modifizierung der Molkenproteine mit Phosphaten wurde mit JOHA SDS 2 eine Phosphatkombination mit möglichst hohem ortho-Phosphatanteil gewählt, mit JOHA S 9 wurde eine Phosphatmischung mit höchstmöglichem Polyphosphatanteil eingesetzt.

### Beispiel 2

Herstellung von Blockschmelzkäse (54 % TM - 48 % Fett i.Tr.)
Ersatz von Labcasein durch modifiziertes Molkenprotein

| **Grundrezeptur (Vergleich):** | **(Erfindung)** |
|---|---|
| 1000,0 g Chester (50 % FiT) | dito |
| 250,0 g Gouda (50 % FiT) | |
| 250,0 g Viereckhartkäse (45 % FiT) | |
| 80,0 g Butter (94 %) | |
| 15,0 g JOHA PZ 7 | |
| 6,0 g JOHA T | |
| 80,0 g Labcasein | 80,0 g Molkenprotein (Proteingehalt ca. 73 %) (Phosphatgehalt 3 % ) |

Schmelzdauer 10 min, 120 UpM, Schmelztemperatur 70 bis 75°C; 350,0 g Wasser, incl. Kondensat (Zugabe 200 g) (FiT = Fett in Trockenmasse)

### Beurteilung der Wiederschmelzbarkeit:

| | Erfindung mit MP | Vergleich Labcasein |
|---|---|---|
| a. Reibfähigkeit: | leicht klebend | in Ordnung |

| Grillfähigkeit | | |
|---|---|---|
| nach 5 Tagen: nach 20 Tagen: | gut | null |
| | gut | gering |

| Toastfähigkeit | | |
|---|---|---|
| nach 5 Tagen: nach 20 Tagen: | in Ordnung | in Ordnung |
| | Toastwert 4 | Toastwert 6 |

| Fettlässigkeit | | |
|---|---|---|
| nach 5 Tagen: nach 20 Tagen: | ausgezeichnet | nein |
| | wenig | kaum |

| fadenziehend | | |
|---|---|---|
| nach 5 Tagen: nach 20 Tagen: | nein | nein |
| | leicht | leicht |

### Herstellung modifizierter Molkenproteine

### 1. Modifizierung mit JOHA SDS, JOHA S 9 Proteingehalte 30 bis 80 %

### Analytik:

| | MP 80 % | A 1 | A 2 |
|---|---|---|---|
| Ges. P₂O₅(%) | 0,96 | 2,29 | 2,47 |
| P-Chrom. | Mono | mono, Start | mono, Start |
| Protein (%) | 75,61 | 76,94 | 77,64 |
| Asche (%) | 2,34 | 4,33 | 4,58 |
| pH (10 %) | -- | 6,4 | 6,5 |
| Löslichkeit | 96 % | -- | 98 % |
| A 1 und A 2 = modifizierte Molkenproteine MP 80 = nicht modifiziertes Molkenproteinkonzentrat | | | |

Zugabe eines 25 bis 30 %-igen Slurrys, bezogen auf das Retentat 1 % JOHA S 9 bzw. 1 % JOHA SDS 2.

(JOHA ist ein eingetragenes Warenzeichen der Anmelderin)

## Patentansprüche

1. Verwendung von Molkeprotein zur Herstellung von Schmelzkäse, **dadurch gekennzeichnet**, daß man stabilisierte Molkeproteinpulver verwendet, die erhalten sind, indem man proteinangereicherte Molkekonzentrate, mit 0,5 - 20 % Phosphat und/oder Citrat bezogen auf den Proteinanteil versetzt, auf eine Temperatur von 35-150, vorzugsweise 50-100° C erhitzt und anschließend trocknet, wobei der Proteinanteil über 30 % der Trockensubstanz betragen soll und das Molkeproteinpulver der Käsemasse in Mengen von bis zu 20, vorzugsweise 5 - 10 Gew.% zugefügt wird.

2. Verwendung eines Molkeproteinpulvers gemäß Anspruch 1, **dadurch gekennzeichnet**, daß es 1 bis 5 % Phosphat oder Citrat enthält.

3. Verwendung eines Molkeproteinpulvers nach Anspruch 1 oder 2, **dadurch gekennzeichnet**, daß es einen Proteinanteil von 50 bis 96 % aufweist.

4. Verwendung eines Mokeproteinpulvers nach den Ansprüchen 1 bis 3, **dadurch gekennzeichnet**, daß 0 - 60% Lactose und 0 bis 10 % anorganische und organische Salze aus der Molke enthalten sind.

5. Verwendung eines Molkeproteinpulvers nach den Ansprüchen 1 bis 4, **dadurch gekennzeichnet**, daß das Pulver noch 2 bis 7 % Wasser enthält.

6. Verwendung eines Molkeproteinpulvers nach den Ansprüchen 1 bis 5, **dadurch gekennzeichnet**, daß Süß- oder Sauermolke durch Ultrafiltration unter teilweiser Entfernung von Wasser, Lactose und gelösten Salzen auf Proteingehalte von 3 bis 30 % in der Lösung und Proteingehalte in der Trockenmasse von 30 bis 96 % eingestellt wird, bevor das Phosphat oder Citrat zugefügt wird.

7. Verfahren zur Herstellung von Schmelzkäse unter Verwendung von Molkenproteinpulver nach den Ansprüchen 1 bis 6, wherein man Käse, Fett, Schmelzsalze, Wasser und andere übliche Bestandteile mit bis zu 20, vorzugsweise 5 - 10 Gew.% des Molkeproteinpulvers mischt, das Gemisch schmilzt, die Schmelzmasse ausformt und abkühlt.

## Claims

1. Use of whey protein for the production of processed cheese, characterised in that one uses stabilised whey protein powders which are obtained in that one mixes protein-enriched whey concentrate with 0.5 - 20% of phosphate and/or citrate referred to the amount of protein, heats to a temperature of 35 - 150°C, preferably of 50 - 100 ° C, and subsequently dries, whereby the amount of protein is to amount to over 30% of the dry substance and the whey protein powder is added to the cheese mass in amounts of up to 20, preferably 5 - 10 wt.%.

2. Use of a whey protein powder according to claim 1, characterised in that it contains 1 to 5% of phosphate or citrate.

3. Use of a whey protein powder according to claim 1 or 2, characterised in that it has an amount of protein of 50 to 96%.

4. Use of a whey protein powder according to claims 1 to 3, characterised in that there are contained 0 - 60% lactose and 0 to 10% of inorganic and organic salts from the whey.

5. Use of a whey protein powder according to claims 1 to 4, characterised in that the powder still contains 2 to 7% of water.

6. Use of a whey protein powder according to claims 1 to 5, characterised in that sweet or acidic whey is adjusted by ultrafiltration, with partial removal of water, lactose and dissolved salts, to protein contents of 3 to 30% in the solution and protein contents in the dry mass of 30 to 96% before the phosphate or citrate is added.

7. Process for the production of processed cheese with use of whey protein powder according to claims 1 to 6, wherein one mixes cheese, fat, processing salts, water and other usual components with up to 20, preferably 5 - 10 wt.% of the whey protein powder, melts the mixture, forms the melt mass and cools.

## Revendications

1. Utilisation de protéine de lactosérum pour la fabrication de fromage fondu, caractérisé en ce qu'on utilise des poudres de protéine de lactosérum stabilisées qui sont obtenues par mélange de concentrés de lactosérum enrichis en protéines à 0,5 à 20 % de phosphate et/ou de citrate, par rapport à la fraction de protéines, par chauffage à une température de 35 à 150, de préférence de 50 à 100 °C et par séchage subséquent, la fraction de protéines devant être supérieure à 30 % de la matière sèche et les poudres de protéine de lactosérum étant ajoutées à la masse de fromage par quantités de jusqu'à 20, de préférence 5 à 10 % en poids.

2. Utilisation d'une poudre de protéine de lactosérum selon la revendication 1, caractérisé en ce qu'elle contient 1 à 5 % de phosphate ou de citrate.

3. Utilisation d'une poudre de protéine de lactosérum selon la revendication 1 ou 2, caractérisé en ce qu'elle présente une fraction de protéines de 50 à 96 %.

4. Utilisation d'une poudre de protéine de lactosérum selon les revendications 1 à 3, caractérisé en ce qu'y sont contenus 0 à 60 % de lactose et 0 à 10 % de sels inorganiques et organiques provenant du lactosérum.

5. Utilisation d'une poudre de protéine de lactosérum selon les revendications 1 à 4, caractérisé en ce que la poudre contient encore 2 à 7 % d'eau.

6. Utilisation d'une poudre de protéine de lactosérum selon les revendications 1 à 5, caractérisé en ce que le lactosérum acide ou doux est réglé par ultrafiltration par élimination partielle d'eau, de lactose et de sels en solution à des teneurs en protéines de 3 à 30 % dans la solution et des teneurs en protéines dans la matière sèche de 30 à 96 %, avant que le phosphate ou le citrate ne soit ajouté.

7. Procédé de fabrication de fromage fondu en utilisant des poudres de protéine de lactosérum selon les revendications 1 à 6, caractérisé en ce qu'on mélange du fromage, de la graisse, des sels fondants, de l'eau et d'autres constituants courants à jusqu'à 20, de préférence 5 à 10 % en poids de la poudre de protéine de lactosérum, en ce qu'on fond le mélange et en ce qu'on moule et refroidit la masse en fusion.
